# EUROPÄISCHE PATENTANMELDUNG

(11) **EP 0 901 310 A2**
(43) Veröffentlichungstag der Anmeldung: **10.03.1999**
(21) Anmeldenummer: 98890213.6
(22) Anmeldetag: 17.07.1998
(51) Int. Cl.: H05B 1/02, H05B 3/74

(54) **Vorrichtung zur Heissanzeige**

(30) Priorität: 03.09.1997 AT 1475/97
(71) Anmelder: ELECTROVAC FABRIKATION ELEKTROTECHNISCHER SPEZIALARTIKEL GESELLSCHAFT M.B.H., 3400 Klosterneuburg (AT)
(72) Erfinder: Morbitzer, Hans-Peter, Ing., 3425 Langenlebarn (AT)
(74) Vertreter: Gibler, Ferdinand, Dipl.Ing. Dr. techn.

(57) **Zusammenfassung**

Vorrichtung zur Heißanzeige bei einem Temperaturregler umfassend einen Temperaturfühler (7) mit einem in einem Rohr (10) geführten Stab (9), dessen Wärmeausdehnungskoeffizient von jenem des Rohres (10) verschieden ist und einen am ersten Ende des Temperaturfühlers (7) angeordneten Schaltkopf (8), wobei das Rohr (10) mit seinem schaltkopfseitigen Ende unbeweglich gegenüber dem Schaltkopf (8) gehalten und der Stab (9) mit seinem schaltkopfseitigen Ende in den Schaltkopf (8) hineinragend und beweglich gegenüber diesem gehalten ist und wobei Rohr (10) und Stab (9) an ihren dem Schaltkopf (8) abgewandten Enden unbeweglich zueinander gehalten sind, umfassend eine im Schaltkopf (8) angeordnete Meßvorrichtung, die ein der Relativbewegung des schaltkopfseitigen Endes des Stabes (9) gegenüber dem Schaltkopf (8) proportionales, analoges, elektrisch weiterverarbeitbares Ausgangssignal liefert.

## Beschreibung

Die Erfindung betrifft eine Vorrichtung zur Heißanzeige bei einem Temperaturregler umfassend einen Temperaturfühler mit einem in einem Rohr geführten Stab, dessen Wärmeausdehnungskoeffizient von jenem des Rohres verschieden ist und einen am ersten Ende des Temperaturfühlers angeordneten Schaltkopf, wobei das Rohr mit seinem schaltkopfseitigen Ende unbeweglich gegenüber dem Schaltkopf gehalten und der Stab mit seinem schaltkopfseitigen Ende in den Schaltkopf hineinragend und beweglich gegenüber diesem gehalten ist und wobei Rohr und Stab an ihren dem Schaltkopf abgewandten Enden unbeweglich zueinander gehalten sind.

Elektrische Kochgeräte mit Strahlungs- bzw. Kontaktheizkörpern weisen den Nachteil auf, daß die Kochfläche nach dem Abschalten des Heizstromes bis zur vollen Abkühlung eine verhältnismäßig lange Zeit benötigt, so daß die Gefahr besteht, sich bei einer Berührung der Kochfläche zu verbrennen. Diese Gefahr tritt vor allem bei jenen Kochgeräten auf, bei denen ein oder mehrere Heizkörper durch eine alle Heizkörper abdeckende Metallplatte, eine Glaskeramikplatte mit sehr niedrigem thermischen Ausdehnungskoeffizienten od. dgl. abgedeckt sind, durch die eine Kochfläche geschaffen wird, die eine durchgehende ebene Fläche des Kochfeldes darstellt. Diese Kochfläche tritt wie die Oberfläche einer Tischplatte in Erscheinung, ohne daß ersichtlich ist, ob eine Berührung ohne Gefahr einer Verbrennung möglich ist. Die unterhalb der Kochfläche angeordneten Heizkörper können Kontaktheizkörper oder Strahlungsheizkörper sein, welch letztere Heizkörper ohne metallische Schutzschicht des Heizleiters darstellen, bei denen die Wärme überwiegend durch Strahlung an die Kochzone abgegeben wird. Bei Kochgeräten mit mehreren Heizkörpern treten auf der Kochfläche je nach Heizung der einzelnen Heizkörper Zonen verschieden hoher Temperatur auf. Wird nun ein Heizkörper geheizt, so weist die ihm zugeordnete Kochzone eine hohe Temperatur auf, wohingegen die Kochzonen der nicht geheizten Heizkörper eine niedrige Temperatur besitzen, also ohne Gefahr einer Verbrennung berührt werden können, was für die Kochzone des geheizten Heizkörpers nicht der Fall ist. Doch ist dies generell an der Kochfläche nicht erkennbar. Die Temperatur beträgt im Strahlungsbereich des Heizkörpers 700°C. Eine gefahrlose Berührung ist aber erst bei Temperaturen möglich, die unter etwa 60°C liegen. Zur Regelung bzw. Begrenzung der Heiztemperatur des Heizkörpers ist es bereits bekannt, zwischen demselben und der Kochfläche einen Temperaturfühler anzuordnen, der aus einem Rohr mit innenliegendem Stab besteht, wobei Rohr und Stab voneinander verschiedene Wärmeausdehungskoeffizienten besitzen. Am ersten Ende des Temperaturfühlers sind Rohr und Stab unverschiebbar gegeneinander verbunden, am anderen Ende des Temperaturfühlers ist ein Schaltkopf mit Kontaktsystem vorgesehen. Das Rohr ist mit seinem dem Schaltkopf zugewandten Ende unbeweglich an diesem Schaltkopf festgelegt, das Ende des Stabes ist in den Schaltkopf hineinragend und frei gegenüber diesem Schaltkopf gehalten. Dadurch kommt es bei Erwärmung des Temperaturfühlers zu einer axialen Relativbewegung des schaltkopfseitigen Endes des Stabes gegenüber dem Rohr bzw. gegenüber dem Schaltkopf, welche zur Betätigung eines Kontaktsystems genützt wird, über welches Kontaktsystem der Heizkörper mit Spannung versorgt wird.

Um vor einer Berührung einer zu heißen Stelle der Kochfläche zu warnen, sind Vorrichtungen zur sogenannten Heißanzeige bekannt geworden, welche im Schaltkopf eines eben erläuterten Temperaturreglers angeordnet sind. Sie umfassen einen Schaltkontakt, der mit einer Signalvorrichtung verbunden ist und der ebenfalls bei temperaturbedingter Verschiebung des schaltkopfseitigen Endes des Stabes betätigt wird. Diese Heißanzeige ist so ausgelegt, daß der Schaltkontakt bei Temperaturen der Kochfläche, die beispielsweise oberhalb von 60°C liegen, betätigt wird, sodaß die Signalvorrichtung anzeigt, daß eine Berührung der Kochfläche die Gefahr einer Verbrennung mit sich bringt. Diese Anzeige kann optisch oder akustisch erfolgen. Optische Signalvorrichtungen, wie z.B. Lämpchen können unterhalb der Kochfläche verteilt angeordnet werden, sodaß ersichtlich gemacht werden kann, welche Bereiche der Kochfläche gefahrlos berührt werden können und welche nicht. Eine lediglich einen Schaltkontakt umfassende Heißanzeige bringt den Nachteil mit sich, daß die Temperatur der Kochstelle nur mit zwei Werten, nämlich "zu heiß für gefahrlose Berührung" und "ausreichend kühl für gefahrlose Berührung" beschrieben wird. Ausgehend von dieser Information ist eine genaue Aussage über die momentane Kochfeldtemperatur nicht möglich.

Es ist daher Aufgabe der Erfindung, eine Vorrichtung zur Heißanzeige bei Rohr mit innenliegendem Stab umfassenden Temperaturreglern anzugeben, welche genaue Informationen über die momentane Temperatur der dem Regler zugeordneten Kochstelle liefert.

Erfindungsgemäß wird dies durch eine im Schaltkopf angeordnete Meßvorrichtung, die ein der Relativbewegung des schaltkopfseitigen Endes des Stabes gegenüber dem Schaltkopf proportionales, analoges, elektrisch weiterverarbeitbares Ausgangssignal liefert. Damit wird der ohnehin zur Ansteuerung des die Heizleistung beeinflussenden Kontaktsystems vorhandene Temperaturfühler gleichzeitig als Thermometer verwendet, wodurch ein entsprechender gesonderter Bauteil eingespart wird. Die Kenntnis der momentanen Kochfeldtemperatur ist vorallem wichtig, um abschätzen zu können, wie lange das Kochfeld noch zu heiß sein wird und damit ungeeignet ist zur Ablage von Gegenständen, die nicht beheizt werden dürfen, wie z.B. Kunststoffgeschirr, Geschirrtücher od. dgl., bzw. andererseits zur Abschätzung, ob und in welchem Ausmaß die im Kochfeld noch enthaltene Restenergie zur Erwärmung von Kochgeschirr genützt werden kann.

Nach einer besonders bevorzugten Ausführungsform der Erfindung kann vorgesehen sein, daß die Meßvorrichtung durch einen induktiven Wegaufnehmer gebildet ist, dessen Spule unbeweglich im Schaltkopf gehalten und dessen Eisenkern verschiebbar im Schaltkopf gelagert und vom schaltkopfseitigen Ende des Stabes bewegbar ist.

Derartige Meßvorrichtungen haben einen einfachen mechanischen Aufbau und sind daher relativ einfach herzustellen und in den Schaltkopf einzubauen. Weiters ist das von ihnen gelieferte Signal, die der Verschiebung des Eisenkernes proportionale Änderung der Spuleninduktivität, durch einfache und an sich bekannte elektrische Schaltungen in Ansteuersignale für entsprechende Signalvorrichtungen umwandelbar.

Bei Temperaturreglern, bei welchen sich an das schaltkopfseitige Ende des Stabes ein Übertragungsglied anschließt, welches durch eine sich mit ihrem ersten Ende am Schaltkopf und mit ihrem zweiten Ende am Übertragungsglied abstützenden Feder in Richtung des Stabes vorgespannt ist, kann in weiterer Ausgestaltung der Erfindung vorgesehen sein, daß der Eisenkern des induktiven Wegaufnehmers zwischen Übertragungsglied und Feder angeordnet ist.

Damit wird eine Festlegung des Eisenkernes am Übertragungsglied erreicht, sodaß diesbezügliche gesonderte Bauteile bzw. entsprechende Verbindungsverfahren wie Kleben, Löten od. dgl. bei der Herstellung des Reglers eingespart werden können.

Nach einer vorteilhaften Weiterbildung dieser Ausgestaltungsweise kann vorgesehen sein, daß der Eisenkern die Form eines einseitig mit einem Boden verschlossenen, vorzugsweise zylindrischen Rohres aufweist, welches mit der freien Oberfläche seines Bodens am Übertragungsglied anliegt und daß die Feder durch eine Schraubenfeder gebildet ist, welche sich in das Rohr hineinerstreckt und sich mit ihrem zweiten Ende an der rohrseitigen Oberfläche des Bodens abstützt.

Der Eisenkern weist damit eine relativ große magnetisch wirksame Länge bei gleichzeitig geringer zwischen Übertragungsglied und Feder liegender geometrischer Länge auf, wodurch eine übermäßige Verlängerung des Schaltkopfes in Richtung der Übertragungsglied-Längsachse unterbleiben kann. Daneben wirkt durch die Anordnung der Feder im Inneren des rohrförmigen Eisenkerns dieselbe als axiale Führung für den Eisenkern.

Bei Temperaturreglern, bei denen sich an das schaltkopfseitige Ende des Stabes ein Übertragungsglied anschließt, welches durch eine U-förmige Feder, die sich mit ihrem ersten Schenkel am Schaltkopf und mit ihrem zweiten Schenkel am Übertragungsglied abstützt, in Richtung des Stabes vorgespannt ist, kann gemäß einer bevorzugten Ausführungsform der Erfindung vorgesehen sein, daß die Meßvorrichtung durch zumindest einen, auf der U-förmigen Feder festgelegten Dehnungsmeßstreifen gebildet ist.

Dehnungsmeßstreifen weisen besonders kleine Abmessungen auf, sodaß sie problemlos an der U-förmigen Feder festgelegt werden können. Sie weisen daneben besonders hohe Empfindlichkeiten auf, sodaß die erhaltenen Meßergebnisses besonders genaue Rückschlüsse auf die Kochfeldtemperatur erlauben.

Die Erfindung wird nun an Hand der in den beigeschlossenen Zeichnungen dargestellten bevorzugten Ausführungsformen näher beschrieben. Es zeigt:
Fig.1 einen Schnitt entlang der Linie I-I der Fig.2 eines Heizkörpers mit einem Temperaturregler;
Fig.2 eine Draufsicht auf den Heizkörper nach Fig. 1;
Fig.3 einen Temperaturregler mit einer ersten Ausführungsform der erfindungsgemäßen Heißanzeige teilweise im Schnitt und mit geöffnetem Schaltkopf;
Fig.4 bis Fig.6 Draufsichten auf geöffnete Schaltköpfe mit erfindungsgemäßen Meßvorrichtungen, die als induktiven Wegaufnehmer ausgestaltet sind;
Fig.7 einen Schaltkopf in der Darstellung nach Fig.4 mit einer als Differential-Transformator ausgebildeten erfindungsgemäßen Meßvorrichtung;
Fig.8,9 Schaltköpfe in der Darstellung nach Fig.4 mit als kapazitive Wegaufnehmer ausgebildeten erfindungsgemäßen Meßvorrichtungen und
Fig.10 einen Schaltkopf in der Darstellung nach Fig.4 mit als Dehnungsmeßstreifen ausgeführter erfindungsgemäßer Meßvorrichtung.

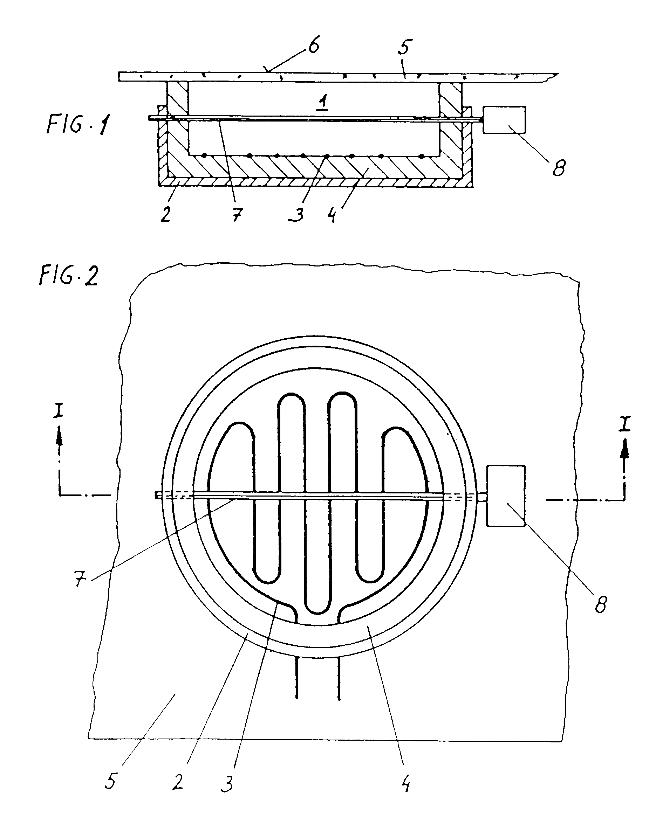

Die Fig. 1 und 2 zeigen einen Strahlungsheizkörper 1, der aus einem Topf 2 besteht, in dem sich eine spiralig gelegte Heizwendel 3 befindet, die in eine Einbettmasse 4 eingebettet ist.

Der Strahlungsheizkörper 1 ist unterhalb der Platte 5 aus Metall, Glaskeramik od. dgl. angeordnet, die die Kochfläche 6 bildet. Zwischen der Kochfläche 6 und der Heizwendel 3 ist ein Temperaturfühler 7 angeordnet der mit einem Schaltkopf 8 in Verbindung steht, wobei der Temperaturfühler 7 in einfacher Weise durch zwei Bohrungen des Strahlungsheizkörpers 1 hindurchgeführt ist.

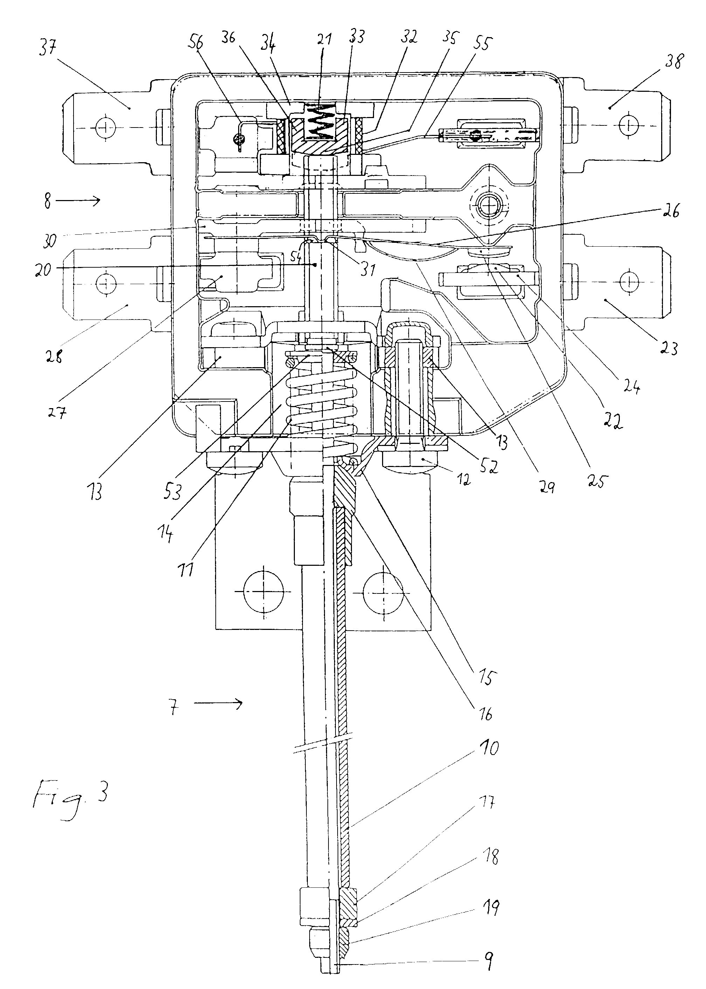

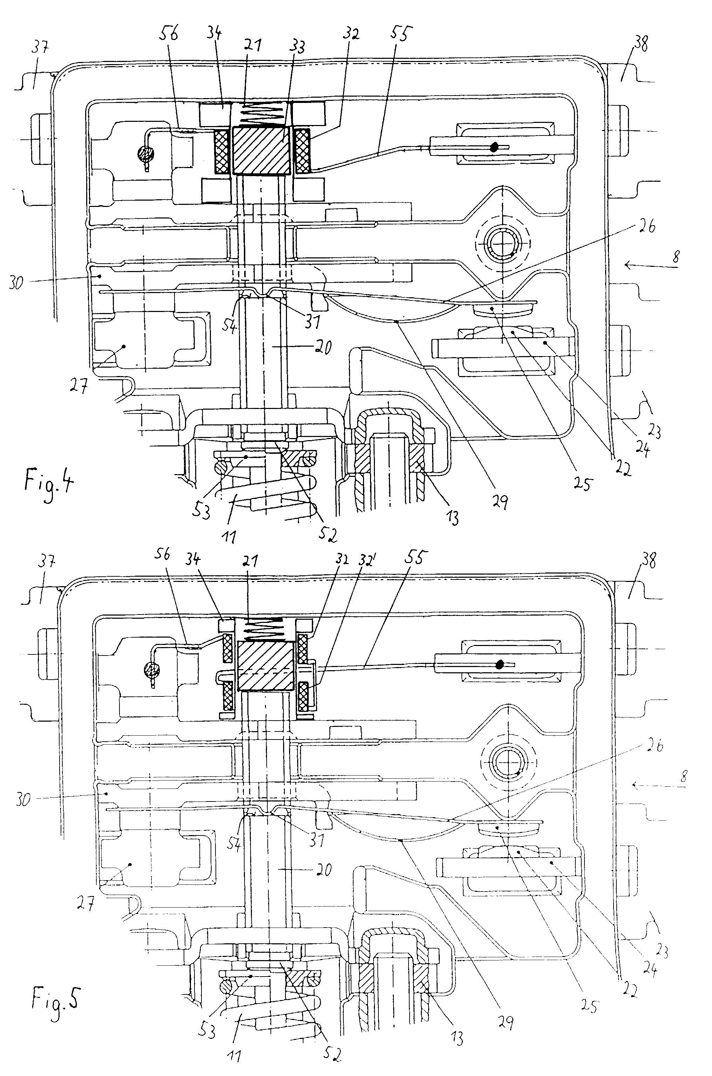

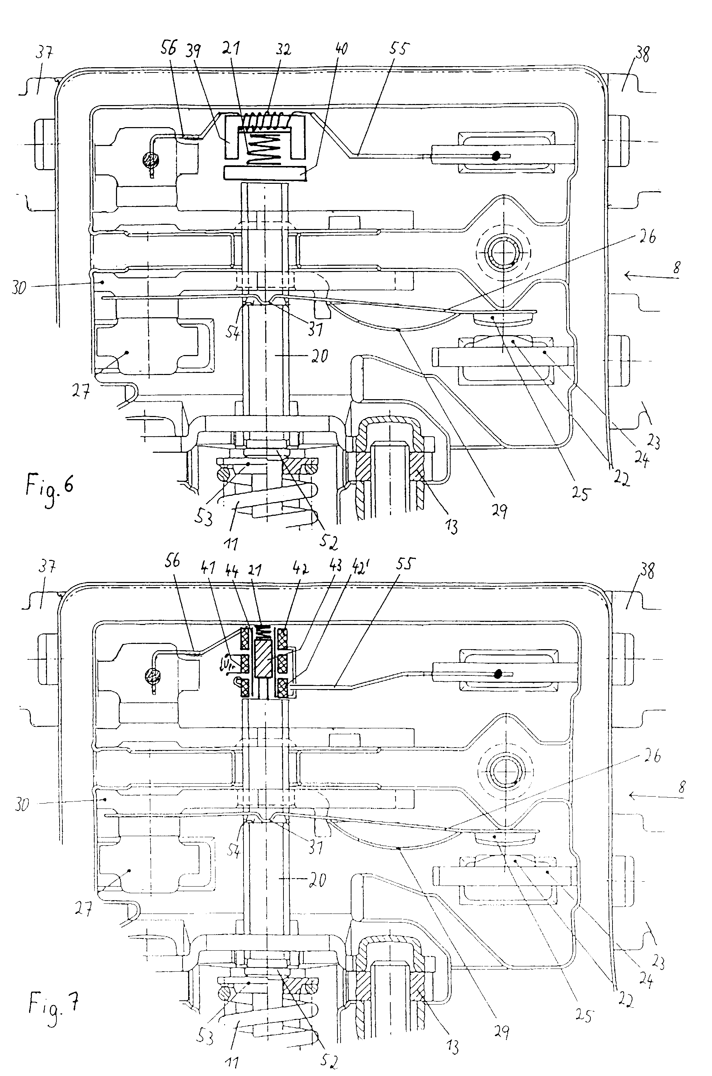

Der Temperaturfühler 7 ist somit der Temperatur ausgesetzt, die unterhalb der Kochfläche 6 in dem Strahlungsraum zwischen der Kochfläche 6 und der Heizwendel 3 herrscht. In Fig.3 ist die aus Temperaturfühler 7 und dem Schaltkopf 8 bestehende Einheit gesondert dargestellt. Der Temperaturfühler 7 weist einen Stab 9 aus einem hochtemperaturbeständigen Material mit hohem thermischen Ausdehnungskoeffizienten, beispielsweise eine Nickel-Chrom-Legierung, auf, der in einem Rohr 10 aus einem hochtemperaturbeständigen Material mit niedrigem thermischen Ausdehnungskoeffizienten, beispielsweise Quarzglas oder Keramik geführt ist, das eine Hülle für den Stab 9 bildet.

Am ersten Ende dieses Temperaturfühlers 7 ist der Schaltkopf 8 angeordnet, der mit dem Temperaturfühler 7 wie folgt verbunden ist. Der Stab 9 ragt in den Schaltkopf 8 hinein und weist an diesem schaltkopfseitigen Ende einen Kopf 52 auf, an dem über ein zylindrisches Plättchen 53 eine Druckfeder 11 abgestützt ist. Diese ist weiters abgestützt an einer mittels der Schrauben 12, die in mit Gewindebohrungen versehene und im Schaltkopf 8 gehaltene Widerlager 13 eingreifen, gehaltenen und eine Ausnehmung 14 des Schaltkopfes überdeckenden Platte 15.

An der Außenseite der Platte 15, die mit einer Aufwölbung im Bereich des den Stab 9 aufnehmenden Durchbruches versehen ist, ist eine hülsenförmige Aufnahme 16 abgestützt, die das schaltkopfseitige Ende des Rohres 10 umgibt.

Am freien, dem Schaltkopf 8 abgewandten Ende des Rohres 10 ist eine vom Stab 9 durchsetzte Scheibe 17 abgestützt. Auf dieser Scheibe 17 liegt eine Distanzscheibe 18 auf. Gehalten ist der Stab 9 und das Rohr 10 mit einer Mutter 19, die auf das mit einem Gewinde versehene Ende des Stabes 9 aufgeschraubt ist. Aufgrund der Druckfeder 11 wird daher der Stab 9 in den Schaltkopf hineingedrückt und über die Scheiben 17, 18 das Rohr 10 über die Aufnahme 16 gegen die Platte 15 gedrückt. Das Rohr 10 ist somit mit seinem schaltkopfseitigem Ende unbeweglich, der Stab 9 hingegen mit seinem schaltkopfseitigen Ende beweglich gegenüber dem Schaltkopf 8 gehalten, wobei gleichzeitig Stab 9 und Rohr 10 an ihren dem Schaltkopf 8 abgewandten Enden unbeweglich zueinander gehalten sind. Da das Rohr 10 und der Stab 9 aus Materialien mit stark unterschiedlichem Wärmeausdehnungskoeffizienten hergestellt sind, ergibt sich bei einer Temperaturänderung eine entsprechende Bewegung des schaltkopfseitigen Endes des Stabes 9 gegenüber dem Schaltkopf 8.

Anschließend an dieses schaltkopfseitige Ende des Stabes 9 ist ein Übertragungsglied 20 angeordnet, das bei Ausdehnung des Stabendes 9 mitgenommen wird. Da keine Verbindung zwischen Stab 9 und Übertragungsglied 20 vorgesehen ist, ist zur Rückstellung des Übertragungsgliedes 20 bei Zusammenziehen des Stabes 9 eine Feder 21 vorgesehen, die sich mit ihrem ersten Ende am Schaltkopf 8 und mit ihrem zweiten Ende am Übertragungsglied 20 abstützt und somit das Übertragungsglied 20 in Richtung des Stabes 9 vorspannt. Primäre Aufgabe dieses Übertragungsgliedes 20 ist es, die Relativbewegung des schaltkopfseitigen Stabendes auf das in den Heizstromkreis geschaltete Kontaktsystem zu übertragen. Dieses umfaßt einen im Schaltkopf 8 festgelegten Kontakt 22, der über einen Kontaktträger 24 mit einer Anschlußfahne 23 verbunden ist. Dieser feste Kontakt 22 wirkt mit einem beweglichen Kontakt 25 zusammen, der an einer Kontaktfeder 26 gehalten ist, welche ihrerseits an einem Kontaktträger 27 gehalten und elektrisch mit einer weiteren Anschlußfahne 28 verbunden ist. Die Kontaktfeder 26 weist einen ausgestanzten Lappen 29 auf, der an einem mit dem Kontaktträger 27 und der Kontaktfeder 26 verbundenen Abstützung 30 abgestützt ist.

Das Übertragungsglied 20 liegt an der Kontaktfeder 26, etwa in deren Mittelbereich, wo sie eine Querrippe 31 aufweist, an. Temperaturbedingte Verschiebungen des Übertragungsgliedes 20 haben damit ein Öffen bzw. Schließen des Kontaktsystems zur Folge. Erfindungsgemäß ist nun vorgesehen, einen in den bisher beschriebenen Details bereits bekannten Temperaturregler um eine im Schaltkopf 8 angeordnete Meßvorrichtung zu erweitern, die ein der Relativbewegung des schaltkopfseitigen Endes des Stabes 9 gegenüber dem Schaltkopf 8 proportionales, analoges, elektrisch weiterverarbeitbares Ausgangssignal liefert.

Eine besonders bevorzugte Ausführungsform einer derartigen Meßvorrichtung ist ein induktiver Wegaufnehmer, der in Fig.3 in Form eines einfachen Tauchanker-Aufnehmers dargestellt ist. Dieser Tauchanker-Aufnehmer ist aus einer Spule 32, in die ein verschiebbarer Eisenkern 33 eintaucht, gebildet. Die Spule 32 ist dabei über ihren Wickelkörper 34 unbeweglich im Schaltkopf 8 gehalten, der Eisenkern 33 ist verschiebbar gelagert und vom schaltkopfseitigen Ende des Stabes 9 bewegbar. Die vom Stab 9 bewirkte Bewegung des Eisenkernes 33 wird dadurch erreicht, daß das Übertragungsglied 20 sich über die Kontaktfeder 26 hinauserstreckend und bis in den Bereich der Spule 32 reichend ausgebildet ist. Dazu weisen sowohl die Abstützung 30 als auch die Kontaktfeder 26 Durchbrechungen, durch welche das Übertragungsglied 20 hindurchgeführt ist, auf. Im Bereich der Querrippe 31 der Kontaktfeder 26 weist das Übertragungsglied 20 eine Schulter 54 auf, mit welcher es die Kontaktfeder 26 weiterhin bewegen kann.

Am dem Stab 9 abgekehrten Ende des Übertragungsgliedes 20 ist der Eisenkern 33 des Tauchanker-Aufnehmers unbeweglich festgelegt, sodaß er sowohl bei Ausdehung als auch beim Zusammenziehen des Stabes 9 mitgenommen und gegenüber der Spule 32 verschoben wird. Diese Festlegung wird beim Ausführungsbeispiel nach Fig.3 dadurch erreicht, daß der Eisenkern 33 zwischen Übertragungsglied 20 und Feder 21 angeordnet ist.

Der Eisenkern 33 hat dabei die Form eines einseitig mit einem Boden 35 verschlossenen, vorzugsweise zylindrischen Rohres 36, welches mit der freien Oberfläche seines Bodens 35 am Übertragungsglied 20 anliegt. Die Feder 21 ist durch eine Schraubenfeder gebildet, welche sich in das Rohr 36 hineinerstreckt und sich mit ihrem zweiten Ende an der rohrseitigen Oberfläche des Bodens 35 abstützt. Bei hohen Temperaturen ist der Stab 9 ausgedehnt und reicht damit weit in den Schaltkopf 8 hinein. Der Eisenkern 33 ist dabei tief in die Spule 32 hineingetaucht, welcher Zustand in Fig.3 dargestellt ist. Mit strichlierten Linien ist demgegenüber die Position des Eisenkernes 33 bei niedrigen Temperaturen angedeutet: Der Stab 9 ist hierbei zusammengezogen, das Übertragungsglied 20 in Richtung Rohr 10 verschoben, wodurch der Eisenkern 33 nur abschnittsweise im Inneren der Spule verläuft. Das Verschieben des Eisenkernes 33 hat eine Veränderung der Eigenschaften des von der Spule 32 aufgebauten Magnetkreises zur Folge: Ist der Eisenkern 33 weit in die Spule eingetaucht, verlaufen die Magnetfeldlinien im Inneren der Spule 32 eine weitere Strecke in Eisen als in Luft; ist der Eisenkern 33 aus der Spule 32 herausgezogen, verlaufen die Magnetfeldlinien eine weitere Strecke in Luft als in Eisen. Da Luft und Eisen stark unterschiedliche Permeabilitäten aufweisen, führt die Eisenkernverschiebung zur Veränderung des magnetischen Widerstandes und damit zur Veränderung der Induktivität der Spule 32. Diese Induktivitätsänderung ist (nicht linear) proportional zur Verschiebung des Eisenkernes 33, damit proportional zur Ausdehnung des Stabes 9 und damit letztendlich ein Maß für die den Temperaturfühler 7 umgebende Temperatur.

Die beiden Wicklungsenden der Spule 32 sind über elektrische Leitungen 55, 56 auf Anschlußfahnen 37, 38 geführt, über welche der Tauchanker-Aufnehmer mit einer nicht mehr dargestellten, weil nicht mehr zur eigentlichen Erfindung gehörenden Beschaltung zur Aufbereitung des Meßsignales für eine entsprechende Anzeige verbindbar ist. Die bislang ausführlich dargestellte Ausführungsform ist nicht als die Erfindung darauf beschränkend zu verstehen. An Hand der Fig.4 bis 10, auf welche im folgenden Bezug genommen wird und in welchen der Übersicht halber nur noch der die erfindungsgemäße Meßvorrichtung beinhaltenden Abschitt des Schaltkopfes 8 dargestellt ist, soll verdeutlicht werden, daß es eine Vielzahl von Realisierungsmöglichkeiten der erfindungsgemäßen Meßvorrichtung gibt.

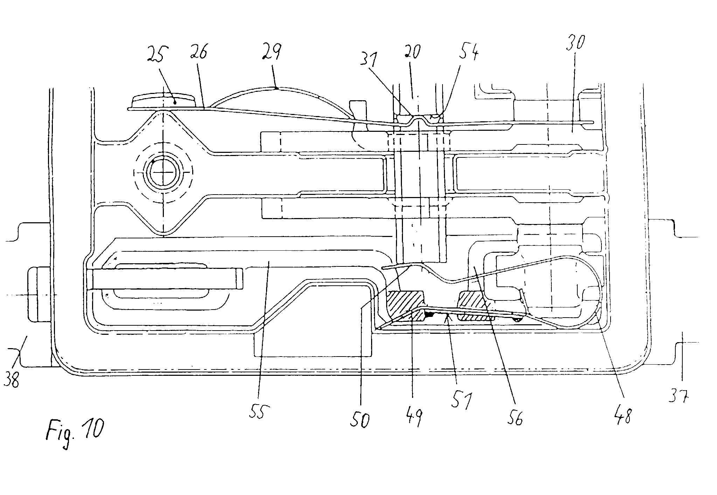

Zunächst muß festgehalten werden, daß die Ausführung des Eisenkerns 33 als Rohr 36 mit Boden 35 sehr einfach durch einen zylinderförmigen Eisenkern 33 ersetzt werden kann (vgl. Fig.4). Die axiale Führung des Eisenkernes 33 kann dabei beispielsweise durch die Innenmantelfläche des Wickelkörpers 34 erreicht werden. Desweiteren kann hier von der Schraubenform der Feder 21 abgegangen werden und statt dessen z.B. eine U-förmige Feder, wie in Fig.10 dargestellt, eingesetzt werden.

In Fig.5 ist eine Weiterbildung der Ausführungsform nach Fig.3 und 4 dargestellt. Die Meßvorrichtung ist hier durch einen Differential-Tauchanker-Aufnehmer gebildet, der analog zu Fig.3 und 4 wieder einen Eisenkern 33 jedoch zwei getrennte Spulen 32, 32' aufweist. In der Mittelstellung taucht der Eisenkern 33 gleich tief in beide Spulen 32,32' ein, wird er verschoben, so wird die Induktivität der einen Spule erhöht und die der anderen vermindert. Durch entsprechendes Zusammenschalten der beiden Spulen 32, 32' kann an den Anschlußfahnen 37, 38 die Differenz der Induktivitätsänderungen, die wieder ein Maß für die Temperatur ist, abgegriffen werden.

Der induktive Aufnehmer der Fig.6 ist ein Querankeraufnehmer. Hier befindet sich die Spule 32 auf dem Schenkel eines U-förmigen Kerns 39. Der magnetische Kreis wird durch einen vom Kern 39 beabstandeten und wieder mit dem Übertragungsglied 20 verbundenen Queranker 40 geschlossen. Die durch Temperaturänderung hervorgerufenen Bewegung des Querankers 40 verändert seinen Abstand zum Kern 39, was sich wieder in Veränderung der Induktivität der Spule 32 äußert.

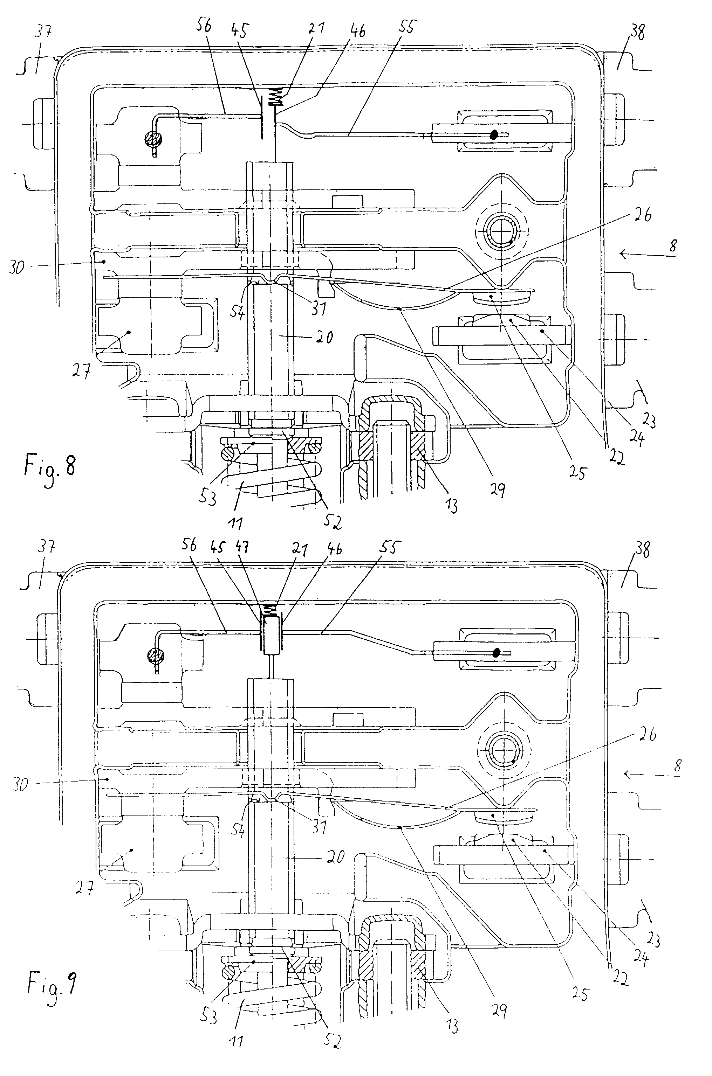

Gemäß Fig.7 ist die erfindungsgemäße Meßvorrichtung durch einen Differentialtransformator gebildet. Er besteht aus einer Primärspule 41 und zwei Sekundärspulen 42, 42'. Gekoppelt sind diese Spulen 42, 42' über den in der Hülse 44 verschiebbaren Kern 43, der wieder mit dem Übertragungsglied 20 in Verbindung steht. Die in den Sekundärspulen 42,42' induzierten Spannungen sind gegeneinandergeschaltet. Steht der Kern 43 in der Mitte der beiden Sekundärspulen 42,42', so sind die beiden Sekundärspannungen gleich und die Ausgangsspannung der Meßvorrichtung ist null. Wird der Kern verfahren, nimmt die Ausgangsspannung der einen Spule zu, die der anderen ab und die Differenz wächst streng linear mit der Verschiebung. Bei dieser Variante ist jedoch zu bedenken, daß zusätzlich zur Auswertschaltung für das Meßsignal eine die Primärspule 41 beaufschlagende Hilfswechselspannungsquelle und ihr zugeordnete zusätzliche Anschlußfahnen notwendig sind. Schließlich zeigen Fig.8 und 9 die Möglichkeit der Verwendung von kapazitiven anstelle der bisher dargestellten induktiven Wegaufnehmern: In Fig.8 umfaßt der kapazitive Aufnehmer eine im Schaltkopf 8 festgelegte 45 und eine vom Übertragungsglied 20 bewegbare Platte 46. Durch Verschiebung der beiden Platten 45, 46 gegeneinander verändert sich die zwischen ihnen wirksame Fläche und damit die Kapazität der Meßvorrichtung.

Gemäß Fig.9 sind beide Kondensatorplatten 45, 46 fest im Schaltkopf 9 festgelegt. Das Übertragungsglied 20 trägt ein zwischen den beiden Platten 45, 46 liegendes Dielektrikum 47, welches bei Temperaturänderung unterschiedlich weit in den Plattenzwischenraum eingeschoben wird, womit sich ebenfalls eine Änderung der Kapazität der Meßanordnung ergibt.

In Fig.10 ist ein Temperaturregler dargestellt, bei welchem zur Vorspannung des Übertragungsgliedes 20 in Richtung des Stabes 9 eine U-förmige Feder 48, die sich mit ihrem ersten Schenkel 49 am Schaltkopf 8 und mit ihrem zweiten Schenkel 50 am Übertragungsglied 20 abstützt, vorgesehen ist.

Die Meßvorrichtung ist hier durch zumindest einen Dehnungsmeßstreifen 51 gebildet, der auf der U-förmigen Feder 48 festgelegt ist. Bei Verschiebung des Übertragungsgliedes 20 kommt es zu einer Annäherung des zweiten 50 an den ersten Schenkel 49. Die U-förmige Feder 48 wird dadurch entlang ihrer äußeren Oberfläche geringfügig und umgekehrt proportional zum Abstand ihrer beiden Schenkel 49, 50 voneinander und damit abhängig von der Temperatur des Kochfeldes gedehnt. Diese Dehnung wird vom Dehnungsmeßstreifen 51 in eine Veränderung seines ohmschen Widerstandes umgesetzt, die an den mit dem Dehnungsmeßstreifen 51 über die elektrischen Leitungen 55, 56 verbundenen Anschlußfahnen 37, 38 abgegriffen werden kann.

In allen beschriebenen Ausführungsformen werden die zwischen der jeweiligen Meßvorrichtung und den zugehörigen Anschlußfahnen 37, 38 verlaufenden elektrischen Leitungen 55, 56 vorzugsweise durch direkt auf eine dünne Keramikplatte aufgebrachte Leiterbahnen gebildet. Für das Festlegen dieser Leiterbahnen auf der Keramik wird das sogenannte "Direct-Copper-Bonding" (DCB)-Verfahren, ein besonders gute Verbindungen von Kupfer und Keramik lieferndes Verbindungsverfahren, verwendet.

Zur Weiterverarbeitung des von der erfindungsgemäßen Meßvorrichtung gelieferten Signales können beispielsweise Wheatstone-Meßbrücken, mit denen Widerstandsänderungen in Änderungen ihrer Ausgangsspannung umgesetzt werden, verwendet werden. Bei denjenigen Realisierungen der erfindungsgemäßen Meßvorrichtung, bei denen eine Induktivität oder eine Kapazität und damit ein komplexer Widerstand verändert wird (Fig.3 bis 9), sind diese Wheatstone-Meßbrücken mit Wechselspannung zu betreiben.

Die der Auswertschaltung nachgeordnete Anzeige kann z.B. die Form mehrerer in Reihe angeordneter Lämpchen haben, wobei die Anzahl der leuchtenden Lämpchen in Abhängigkeit vom Ausgangssignal der Meßvorrichtung verändert wird. Alternativ dazu könnte eine Leuchteinrichtung verwendet werden, deren Farbe durch das Meßsignal verändert wird oder ein mit der Meßvorrichtung verbundenes Zeigerinstrument eingesetzt werden.

## Patentansprüche

1. Vorrichtung zur Heißanzeige bei einem Temperaturregler umfassend einen Temperaturfühler (7) mit einem in einem Rohr (10) geführten Stab (9), dessen Wärmeausdehnungskoeffizient von jenem des Rohres (10) verschieden ist und einen am ersten Ende des Temperaturfühlers (7) angeordneten Schaltkopf (8), wobei das Rohr (10) mit seinem schaltkopfseitigen Ende unbeweglich gegenüber dem Schaltkopf (8) gehalten und der Stab (9) mit seinem schaltkopfseitigen Ende in den Schaltkopf (8) hineinragend und beweglich gegenüber diesem gehalten ist und wobei Rohr (10) und Stab (9) an ihren dem Schaltkopf (8) abgewandten Enden unbeweglich zueinander gehalten sind **gekennzeichnet durch** eine im Schaltkopf (8) angeordnete Meßvorrichtung, die ein der Relativbewegung des schaltkopfseitigen Endes des Stabes (9) gegenüber dem Schaltkopf (8) proportionales, analoges, elektrisch weiterverarbeitbares Ausgangssignal liefert.

2. Vorrichtung nach Anspruch 1, **dadurch gekennzeichnet**, daß die Meßvorrichtung durch einen induktiven Wegaufnehmer gebildet ist, dessen Spule (32) unbeweglich im Schaltkopf (8) gehalten und dessen Eisenkern (33) bzw. Queranker (40) verschiebbar im Schaltkopf (8) gelagert und vom schaltkopfseitigen Ende des Stabes (9) bewegbar ist.

3. Vorrichtung nach Anspruch 2, wobei sich an das schaltkopfseitige Ende des Stabes (9) ein Übertragungsglied (20) anschließt, welches durch eine sich mit ihrem ersten Ende am Schaltkopf (8) und mit ihrem zweiten Ende am Übertragungsglied (20) abstützenden Feder (21) in Richtung des Stabes (9) vorgespannt ist, **dadurch gekennzeichnet**, daß der Eisenkern (33) des induktiven Wegaufnehmers zwischen Übertragungsglied (20) und Feder (21) angeordnet ist.

4. Vorrichtung nach Anspruch 3, **dadurch gekennzeichnet**, daß der Eisenkern (33) die Form eines einseitig mit einem Boden (35) verschlossenen, vorzugsweise zylindrischen Rohres (36) aufweist, welches mit der freien Oberfläche seines Bodens (35) am Übertragungsglied (20) anliegt und daß die Feder (21) durch eine Schraubenfeder gebildet ist, welche sich in das Rohr (36) hineinerstreckt und sich mit ihrem zweiten Ende an der rohrseitigen Oberfläche des Bodens (35) abstützt.

5. Vorrichtung nach Anspruch 1, wobei sich an das schaltkopfseitige Ende des Stabes (9) ein Übertragungsglied (20) anschließt, welches durch eine U-förmige Feder (48), die sich mit ihrem ersten Schenkel (49) am Schaltkopf (8) und mit ihrem zweiten Schenkel (50) am Übertragungsglied (20) abstützt, in Richtung des Stabes (9) vorgespannt ist, **dadurch gekennzeichnet**, daß die Meßvorrichtung durch zumindest einen, auf der U-förmigen Feder (48) festgelegten Dehnungsmeßstreifen (51) gebildet ist.
